(19) Europäisches Patentamt
European Patent Office
Office européen des brevets

(11) EP 1 759 763 B1

(12) # EUROPEAN PATENT SPECIFICATION

(45) Date of publication and mention of the grant of the patent:
**02.05.2018 Bulletin 2018/18**

(21) Application number: **06017784.7**

(22) Date of filing: **25.08.2006**

(51) Int Cl.:
***B01J 23/63*** (2006.01) ***B01J 37/03*** (2006.01)
***F01N 3/035*** (2006.01) ***B01D 53/94*** (2006.01)
***B01J 35/00*** (2006.01) *B01J 35/00* (2006.01)

(54) **Exhaust gas purification catalyst and catalyst-equipped diesel particulate filter**

Abgaskatalysator und mit Katalysator beladener Dieselpartikelfilter

Catalyseur de purification des gaz d'échappement et filtre à particules Diesel muni de catalyseur

(84) Designated Contracting States:
**DE**

(30) Priority: **05.09.2005 JP 2005256581**

(43) Date of publication of application:
**07.03.2007 Bulletin 2007/10**

(73) Proprietor: **Mazda Motor Corporation**
**Aki-gun,**
**Hiroshima 730-8670 (JP)**

(72) Inventors:
- **Harada, Koichiro**
  **Aki-gun**
  **Hiroshima 730-8670 (JP)**
- **Fujita, Hiroki**
  **Aki-gun**
  **Hiroshima 730-8670 (JP)**
- **Okamoto, Kenji**
  **Aki-gun**
  **Hiroshima 730-8670 (JP)**
- **Tsushio, Yoshinori**
  **Aki-gun**
  **Hiroshima 730-8670 (JP)**
- **Takami, Akihide**
  **Aki-gun**
  **Hiroshima 730-8670 (JP)**

(74) Representative: **Zinnecker, Armin et al**
**Lorenz Seidler Gossel**
**Rechtsanwälte Patentanwälte**
**Partnerschaft mbB**
**Widenmayerstraße 23**
**80538 München (DE)**

(56) References cited:
**EP-A- 1 840 087**
**WO-A-03/021004**
**JP-A- 2004 174 490**
**US-A- 5 380 692**
**US-A1- 2005 142 042**

EP 1 759 763 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

(a) Field of the Invention

This invention relates to exhaust gas purification catalyst and catalyst-equipped diesel particulate filters.

(b) Description of the Related Art

Motor vehicles, such as cars, generally have a catalyst, mounted in their engine exhaust system, for converting the exhaust gas containing air pollutants, such as HC (hydrocarbon) and CO (carbon monoxide). Some of diesel engine vehicles have a diesel particulate filter (DPF) equipped with a catalyst for burning particulate matters (PMs) contained in the exhaust gas. These kinds of catalysts contain precious metal particles, such as platinum (Pt), carried on the surface of an oxide support forming a catalytic coating.

Examples of known oxide supports being used include aluminas with high specific surface area and Ce-Zr-based mixed oxides having oxygen storage capacity. Ce-Zr-based mixed oxides take and store oxygen in their oxygen defect sites under oxygen-rich conditions of leaner air-fuel ratios than the stoichiometric air-fuel ratio. On the other hand, under oxygen-lean conditions of richer air-fuel ratios than the stoichiometric air-fuel ratio, Ce-Zr-based mixed oxides release oxygen to convert HC and CO in the exhaust gas into harmless substances by oxidization.

In regard to a catalyst material containing a Ce-Zr-based mixed oxide, Unexamined Japanese Patent Publication No. 2004-174490 discloses a catalyst material containing Ce, Zr and a catalytic metal other than Ce and Zr with these components homogeneously dispersed therein and its fabricating method with the aim of improving catalytic performance. Although not regarding a Ce-Zr-based mixed oxide, Unexamined Japanese Patent Publication No.S64-34443 (EP0299485) discloses a method for fully oxidizing air pollutants in exhaust gas in a combustion engine using a catalyst of Pd-Zr mixed oxide.

In the case of Ce-Zr-based mixed oxides, their oxygen storage/release capacity is attributed to the convertibility of Ce ions from trivalent to tetravalent and vice versa, Zr contributes to distorting Ce-Zr-based mixed oxide crystals to form oxygen defect sites and improving the thermal resistance, but $ZrO_2$ (zirconia) hardly acts on oxygen storage and release.

Aside from this, zirconia is known to have oxygen ion conductivity. For example, oxygen sensors use partially stabilized zirconia in which Zr contained as a main component is doped with several mol% of rare earth metal. Such substances having oxygen ion conductivity can move oxygen ions from their oxygen-rich sites to oxygen-lean sites and release oxygen from the surface portions of the oxygen-lean sites. Therefore, it can be considered to use such oxygen ion conductivity to improve the exhaust gas purification performance of catalysts.

However, partially stabilized zirconia (PSZ) is obtained by sintering doped zirconia at high temperatures, for example, 1300°C and, thus, has high density and extremely small specific surface area. Therefore, even if precious metal fine particles are carried on each of particles of PSZ, they are less likely to be highly dispersed. From this point of view, it cannot be expected that PSZ improves the exhaust gas purification performance. It may be considered to lower the sintering temperature of doped zirconia to decrease the sintering density and thereby increase the specific surface area of PSZ. This, however, results in deteriorated oxygen ion conductivity.

Further, it is generally known that when particles on each of which precious metal fine particles are carried are exposed to high-temperature exhaust gas, the precious metal fine particles agglomerate and sinter to deteriorate their activity.

The above-mentioned Unexamined Japanese Patent Publication No.S64-34443 discloses a method for fully oxidizing carbon monoxide and aliphatic and aromatic hydrocarbons using a catalyst of Pd-Zr mixed oxide and, particularly, a method for fully oxidizing them in exhaust gas in a combustion engine. However, the catalyst reacts to the air pollutants at temperatures of 350°C or less and, therefore, has a difficulty in its use in the form of a exhaust gas purification catalyst or a catalyst-equipped DPF under high-temperature conditions.

EP-A-1 840 087 which has an earlier priority as the invention but was published after the filing of the invention discloses an exhaust gas purifying catalyst comprising a heat resistant oxide of Zr, a rare earth metal, e.g. La, Y, Nd, and a noble metal. The heat-resistant oxide is obtained by coprecipitation. In the examples, Rh is used as the precious metal. The mixed oxide is obtained by calcining a coprecipitate of Zr and the rare earth metal and post-impregnating the calcined coprecipitate with Rh.

US 2005/142042 A1 discloses an exhaust treatment device comprising a precious metal and a solid solution of Y, Zr and Ti. The precious metal may be incorporated into the solid solution.

US-A-5 380 692 discloses a catalyst comprising a perovskite type compound oxide.

WO 03/021004 A discloses exhaust gas catalysts and yttria-stabilized zirconia incorporating palladium.

## SUMMARY OF THE INVENTION

With the foregoing in mind, an object of the present invention is to provide, with the use of a Zr-based mixed oxide having oxygen ion conductivity, an exhaust gas purification catalyst capable of improving exhaust gas purification performance and a catalyst-equipped DPF capable of enhancing the burning rate of trapped PMs. A first aspect of the invention is directed to an exhaust gas purification catalyst for an exhaust system of an engine, containing a mixed oxide of Zr, rare earth metal and precious metal. The exhaust gas purification catalyst is characterized in that the mixed oxide consists of Zr, at least one kind of rare earth metal selected from the group of Yb, Nd and Sc, and Pt, the mixed oxide being obtained by mixing an acidic solution containing Zr ions, ions of at least one kind of rare earth metal selected from the group of Yb, Nd and Sc, and Pt ions with a basic solution to obtain a mixed oxide precursor through coprecipitation, and calcining the precursor. Each particle of the above mixed oxide can take oxygen from a large number of its oxygen-rich sites via precious metal fine particles contained therein into the inside and send the taken oxygen to its oxygen-lean sites. Therefore, particles of the above mixed oxide have a highly effective function serving as an oxygen pump as compared with particles of mixed oxide on each of which precious metal fine particles are post-carried. Hence, the exhaust gas purification catalyst of the present invention can extensively improve the low-temperature catalytic activity as compared with exhaust gas purification catalysts using oxygen storage component.

According to the invention the rare earth metal is selected from the group of Yb, Nd and Sc. Therefore, a highly effective oxygen pump function can be given to the mixed oxide, which improves low-temperature catalytic activity. According to the invention the mixed oxide is obtained by mixing an acidic solution containing Zr ions, ions of at least one kind of rare earth metal selected from the group of Yb, Nd, and Sc, and Pt ions with a basic solution to obtain a mixed oxide precursor through coprecipitation and calcining the precursor. Therefore, platinum fine particles can be placed in a highly dispersed form on the surface of each mixed oxide crystallite, which is advantageous in extensively improving the low-temperature catalytic activity.

A second solution of the invention is directed to a catalyst-equipped diesel particulate filter for an exhaust system of a diesel engine and equipped with a catalyst according to the invention. Hence, the diesel particulate filter of the present invention can easily release active oxygen to portions of the mixed oxide in contact with PMs, thereby enhancing the rate at which the catalyst burns PMs.

## BRIEF DESCRIPTION OF THE DRAWINGS

Figure 1 is a graph showing the light-off temperatures for CO and HC conversion of catalysts according to inventive examples and comparative examples.

Figure 2 is a graph showing the carbon burning rates of the catalysts.

Figure 3 shows X-ray diffraction measurement results of the catalysts according to one inventive example and one comparative example.

## DETAILED DESCRIPTION OF THE INVENTION

The present invention will be described below with reference to the drawings. In the following description, examples of the present invention, i.e., inventive examples, are given as catalysts containing a mixed oxide consisting of Zr, at least one kind of rare earth metal selected from the group of Yb, Nd, and Sc, and platinum, a comparative example is given as a catalyst containing a mixed oxide of Ce, Zr, Nd and Pt (a Ce-Zr-based mixed oxide) and other comparative examples are given as catalysts containing a mixed oxide on which Pt is post-carried.

### *(1) Preparation of Powdered Catalyst*

First, a description is given of a preparation method of powdered catalysts of the inventive examples.

Nitrates of metals, specifically, nitrates of Zr and a rare earth metal other than Ce, namely Sc, Yb or Nd, are dissolved in ion-exchange water. The number of kinds of rare earth metal used may be singular or plural. Next, a solution of diamminedinitro platinum nitrate is added to the above water solution and mixed with it.

Then, a basic solution, such as aqueous ammonia, is added to and mixed with the above mixed solution (acidic), thereby providing coprecipitation of a mixed hydroxide containing Zr, the rare earth metal other than Ce and Pt (hereinafter, referred to as a mixed oxide precursor). The mixed oxide precursor is separated from the mixed solution by centrifugation, well rinsed in water and then dried by heating it, for example, at 300°C. After dried, the mixed oxide precursor is pounded in a mortar and then calcined by heating it under atmospheric conditions. The calcining is implemented by keeping the mixed oxide precursor at 500°C for two hours.

In the above manner, powdered catalysts of the inventive examples, i.e., powdered catalysts containing a mixed oxide of Zr, at least one kind of rare earth metal selected from the group of Yb, Nd, and Sc, and Pt were obtained. In the above manner, a powdered catalyst containing a mixed oxide of Zr, Y, and Pt was also obtained, which is not according to the invention.

The preparation of a powdered catalyst of the comparative example was implemented in the same manner as in the inventive examples except that the nitrates of metals dissolved in ion-exchange water were nitrates of Ce, Zr and Nd. Thus, a powdered catalyst containing a mixed oxide of Zr, Ce, Nd and Pt was obtained.

Further, as the other comparative examples, powdered catalysts were prepared in which Pt was post-carried on a mixed oxide of Zr and rare earth metal other than Ce or a mixed oxide of Ce, Zr and Nd. The preparation method of the Pt-post-carried powdered catalysts was as follows.

Nitrates of metals, specifically, nitrates of Zr and a rare earth metal other than Ce, such as Sc, Yb, Y or Nd, or nitrates of Ce, Zr and Nd, were dissolved in ion-exchange water. Next, a basic solution, such as aqueous ammonia, was added to and mixed with the above mixed solution (acidic), thereby providing coprecipitation of a mixed oxide precursor containing Zr and a rare earth metal other than Ce or a mixed oxide precursor containing Ce, Zr and Nd. The mixed oxide precursor was separated from the mixed solution by centrifugation, well rinsed in water and then dried by heating it, for example, at 300°C. After dried, the mixed oxide precursor was calcined by heating it under atmospheric conditions. The calcining was implemented by keeping the mixed oxide precursor at 500°C for two hours.

Then, a solution of diamminedinitro platinum nitrate was added to the powdered oxide obtained in the above manner so that 1 mass% of Pt can be carried on the oxide, and ion-exchange water was further added to and mixed with it. After the mixture, the solution was evaporated to dryness, for example, at 300°C. After the evaporation to dryness, the oxide was pounded in a mortar and then calcined by heating it under atmospheric conditions. The calcining was implemented by keeping the oxide at 500°C for two hours. Obtained in this manner was a powdered catalyst in which Pt was post-carried on a mixed oxide of Zr and a rare earth metal other than Ce or a mixed oxide of Ce, Zr and Nd.

*(2) Preparation of Sample for Catalytic Performance Evaluation*

Next, a description is given of a method of preparing a sample for catalytic performance evaluation (including coating a DPF with a powdered catalyst).

Each of the powdered catalysts of the inventive examples, the comparative example and the other comparative example was mixed with a binder and ion-exchange water to obtain a slurry. One end of a DPF support made of silicon carbide (SiC) was immersed in the slurry and, in this state, aspiration was made from the other end of the DPF support with an aspirator. After the DPF support was picked up from the slurry, residual slurry having not been removed by aspiration was removed by applying an air blow from the one end of the support. Then, the DPF support was dried and then calcined by heating it under atmospheric conditions. The calcining was implemented by keeping the DPF support at 500°C for two hours. Next, the DPF support was kept at 800°C for 24 hours under atmospheric conditions. Obtained in this manner were samples for catalytic performance evaluation for the inventive, the comparative and the other comparative examples mentioned in the above section (1).

The DPF support used has a volume of 25cc and a cell density of 300 cells per square inch (approximately $6.45cm^2$) and its wall thickness separating cells is 12mil (approximately 0.3mm).

*(3) Evaluation of Exhaust Gas Purification Performance*

The catalysts of the inventive, the comparative and the other comparative examples were evaluated in terms of their exhaust gas purification performance using the samples for catalytic performance evaluation obtained in the above manner.

Specifically, each sample was attached to a fixed-bed model gas flow reactor, model gas was allowed to flow through the flow reactor and the light-off temperature of each sample for conversion of CO and HC was measured. The composition of the model gas is shown in Table 1 in which the components are indicated in parts per million or percentage with respect to the total flow quantity of the model gas.

Table 1

| | |
|---|---|
| HC | 200ppmC |
| CO | 400ppm |
| NO | 500ppm |
| $O_2$ | 10% |

(continued)

| | |
|---|---|
| $CO_2$ | 4.5% |
| $H_2O$ | 10% |
| $N_2$ | Balanced |

The light-off temperature is the model gas temperature at which the CO or HC conversion efficiency reaches 50% during gradual increase in the temperature of the model gas flowing into the catalyst from normal temperature. In the evaluation, the space velocity SV was 50000 $h^{-1}$ and the rate of temperature increase of the model gas was 30°C/min.

Figure 1 is a graph showing the light-off temperatures of the catalysts for conversion of CO and HC, wherein the rates of oxide components relative to the total quantity of a mixed oxide in each catalyst are indicated in units of mol%. In Figure 1, the inventive examples are shown by graph bars of CO (Pt-coprecipitated) and HC (Pt-coprecipitated) for the $ZrO_2$-$Sc_2O_3$ mixed oxide, $ZrO_2$-$Yb_2O_3$ mixed oxide and $ZrO_2$-$Nd_2O_3$ mixed oxide, the comparative example is shown by bars of CO (Pt-coprecipitated) and HC (Pt-coprecipitated) for the $CeO_2$-$ZrO_2$-$Nd_2O_3$ mixed oxide, and the other comparative examples are shown by bars of CO (Pt-post-carried) and HC (Pt-post-carried) for all the mixed oxides. In the following description, the Pt-coprecipitated $ZrO_2$-$Sc_2O_3$ mixed oxide, the Pt-coprecipitated $ZrO_2$-$Yb_2O_3$ mixed oxide, the Pt-coprecipitated $ZrO_2$-$Y_2O_3$ mixed oxide (not according to the invention) and the Pt-coprecipitated $ZrO_2$-$Nd_2O_3$ mixed oxide are given as Example 1, Example 2, Example 3 (not according to the invention) and Example 4, respectively.

Table 2 shows data on the light-off temperatures for CO and HC conversion of the catalysts shown in Figure 1, wherein data for Examples 1 to 4 are given within the heavy-line frame.

Table 2

| | Pt-post-carried | | Pt-coprecipitated | |
|---|---|---|---|---|
| | CO | HC | CO | HC |
| $CeO_2$-80mol%$ZrO_2$-1mol%$Nd_2O_3$ | 310 | 325 | 302 | 314 |
| $ZrO_2$-8mol%$Sc_2O_3$ | 264 | 279 | 247 | 259 |
| $ZrO_2$-8mol%$Yb_2O_3$ | 272 | 288 | 256 | 272 |
| $ZrO_2$-8mol%$Y_2O_3$ | 279 | 293 | 264 | 281 |
| $ZrO_2$-12mol%$Nd_2O_3$ | 255 | 270 | 232 | 251 |

Referring to Figure **1** and Table 2, the catalyst of Pt-post-carried $CeO_2$-$ZrO_2$-$Nd_2O_3$ mixed oxide and the catalyst of Pt-coprecipitated $CeO_2$-$ZrO_2$-$Nd_2O_3$ mixed oxide have light-off temperatures for CO conversion of 310°C and 302°C, respectively, whereas the catalysts of Pt-coprecipitated mixed oxides of Examples 1 to 4 have light-off temperatures for CO conversion of 247°C, 256°C, 264°C and 232°C, respectively. This shows that the light-off temperatures for CO conversion of Examples 1 to 4 are greatly reduced as compared with those of the comparative examples. Also in comparison with the Pt-post-carried $ZrO_2$-$Sc_2O_3$ mixed oxide, $ZrO_2$-$Yb_2O_3$ mixed oxide, $ZrO_2$-$Y_2O_3$ mixed oxide and $ZrO_2$-$Nd_2O_3$ mixed oxide, the Pt-coprecipitated mixed oxides of Examples 1 to 4 are reduced in light-off temperature for CO conversion. As can be seen from this, the use of a catalyst containing a mixed oxide consisting of Zr, a rare earth metal selected from the group of Yb, Nd, and Sc, and platinum enables a significant reduction in light-off temperature for CO conversion.

Referring again to Figure **1** and Table 2, the catalyst of Pt-post-carried $CeO_2$-$ZrO_2$-$Nd_2O_3$ mixed oxide and the catalyst of Pt-coprecipitated $CeO_2$-$ZrO_3$-$Nd_2O_3$ mixed oxide have light-off temperatures for HC conversion of 325°C and 314°C, respectively, whereas the catalysts of Pt-coprecipitated mixed oxides of Examples 1 to 4 have light-off temperatures for HC conversion of 259°C, 272°C, 281 °C and 251°C, respectively. This shows that the light-off temperatures for HC conversion of Examples 1 to 4 are greatly reduced as compared with those of the comparative examples. Also in comparison with the Pt-post-carried $ZrO_2$-$Sc_2O_3$ mixed oxide, $ZrO_2$-$Yb_2O_3$ mixed oxide, $ZrO_2$-$Y_2O_3$ mixed oxide and $ZrO_2$-$Nd_2O_3$ mixed oxide, the Pt-coprecipitated mixed oxides of Examples 1 to 4 are reduced in light-off temperature for HC conversion. As can be seen from this, the use of a catalyst containing a mixed oxide consisting of Zr, a rare earth metal selected from the group of Yb, Nd, and Sc, and platinum enables a significant reduction in light-off temperature for HC conversion.

Therefore, since the catalyst according to the present invention contains a mixed oxide consisting of Zr, a rare earth metal selected from the group of Yb, Nd, and Sc, and platinum, it can be greatly improved in low-temperature catalytic activity as compared with catalysts using oxygen storage component (for example, $CeO_2$-$ZrO_2$-$Nd_2O_3$ mixed oxide).

Furthermore, the above effect can be performed by the mixed oxide containing at least one of Yb, Nd and Sc as the rare earth metal.

*(4) Evaluation of Carbon Burning Property*

Next, the above-mentioned catalysts were evaluated in terms of their carbon burning property using the above-mentioned samples for catalytic performance evaluation.

To evaluate the carbon burning property, first, 10cc of ion-exchange water was added to an amount of carbon black equivalent to 10g/L and the carbon black was mixed with the ion-exchange water by a stirrer for five minutes to disperse the carbon black in it well. Next, one end of a DPF support, which is each sample for catalytic performance evaluation, was immersed in the mixture and, in this state, aspiration was made from the other end of the DPF support with an aspirator.

After the DPF support was picked up from the mixture, residual slurry having not been removed by aspiration was removed by applying an air blow from the immersed end of the DPF support. Then, the DPF support was dried by keeping it, for example, at 150°C for about two hours. Thus, samples for carbon burning property evaluation were obtained.

Each sample for carbon burning property evaluation was attached to a fixed-bed model gas flow reactor, model gas was allowed to flow through the flow reactor and the respective amounts of CO and $CO_2$ produced by carbon burning were measured. The composition of the model gas is shown in the following Table 3 in which the components are indicated in percentage with respect to the total flow quantity of the model gas.

Table 3

| | |
|---|---|
| $O_2$ | 10vol% |
| $H_2O$ | 10vol% |
| $N_2$ | Balanced |

Specifically, the temperature of the model gas flowing into the catalyst sample was gradually increased from normal temperature and the respective amounts of CO and $CO_2$ produced when the gas temperature at the catalyst entrance reached 590°C were measured. In the evaluation, the space velocity SV was 80000 $h^{-1}$ and the rate of temperature increase of the model gas was 15°C/min. Based on the obtained CO amount and $CO_2$ amount, the carbon burning rate was calculated using the following formula:

$$\text{Carbon burning rate (g/hL)} = \{(\text{gas flow rate (L/h)}) \times [((CO+CO_2)\ \text{concentration (ppm)})/1\times10^6]\} \times 40 \times 12/22.4$$

Figure **2** is a graph showing the carbon burning rates of the catalysts and Table 4 shows data on the carbon burning rates of the catalysts shown in Figure **2** (wherein data for Examples 1 to 4 are given within the heavy-line frame in Table 4).

Table 4

| | Pt-post-carried | Pt-coprecipitated |
|---|---|---|
| $CeO_2$-80mol%$ZrO_2$-1 mol%$Nd_2O_3$ | 16.8 | 17.6 |
| $ZrO_2$-8mol%$Sc_2O_3$ | 26.5 | 28.0 |
| $ZrO_2$-8mol%$Yb_2O_3$ | 25.3 | 26.7 |
| $ZrO_2$-8mol%$Y_2O_3$ | 23.4 | 25.3 |
| $ZrO_2$-12mol%$Nd_2O_3$ | 26.5 | 29.4 |

Referring to Figure **2** and Table 4, the catalyst of Pt-post-carried $CeO_2$-$ZrO_2$-$Nd_2O_3$ mixed oxide and the catalyst of Pt-coprecipitated $CeO_2$-$ZrO_2$-$Nd_2O_3$ mixed oxide have carbon burning rates of 16.8 and 17.6 g/hL, respectively, whereas the catalyst of Pt-coprecipitated mixed oxides of Examples 1 to 4 have carbon burning rates of 28.0, 26.7, 25.3 and 29.4 g/hL, respectively. This shows that the carbon burning rates of Examples 1 to 4 are greatly increased as compared with those of the comparative examples. Also in comparison with the Pt-post-carried $ZrO_2$-$Sc_2O_3$ mixed oxide, $ZrO_2$-$Yb_2O_3$ mixed oxide, $ZrO_2$-$Y_2O_3$ mixed oxide and $ZrO_2$-$Nd_2O_3$ mixed oxide, the Pt-coprecipitated mixed oxides of Examples 1 to 4 have higher carbon burning rates. As can be seen from this, the use of a catalyst containing a mixed oxide of Zr, rare earth metal other than Ce and precious metal enables a significant increase in carbon burning rate.

Therefore, since the catalysts of the inventive examples contain a mixed oxide consisting of Zr, at least one kind of rare earth metal selected from the group of Yb, Nd, and Sc, and Pt, a DPF equipped with the catalyst can release active oxygen to portions of the mixed oxide in contact with PMs, thereby improving the rate of burning of PMs, i.e., the PM burning rate.

Furthermore, the above effect can be performed by the mixed oxide containing at least one of Yb, Nd and Sc as the rare earth metal.

*(5) Oxygen Ion Conductivity*

The Pt-coprecipitated $ZrO_2$-12mol%$Nd_2O_3$ mixed oxide (Example 4), Pt-post-carried $ZrO_2$-12mol%$Nd_2O_3$ mixed oxide and Pt-coprecipitated $CeO_2$-$ZrO_2$-$Nd_2O_3$ mixed oxide were evaluated in terms of their oxygen ion conductivity. The degree of oxygen ion conductivity can be evaluated by measuring electric conductivity.

To evaluate the oxygen ion conductivity, powders of the above three kinds of mixed oxides were each formed into a rectangular green compact of 5mm width, 30mm length and 1mm thickness by applying a pressure of 147 to 245 MPa to the respective powders in their thickness direction and then calcined, thereby obtaining respective evaluation samples. The calcining was implemented by keeping each powder at 800°C for six hours. Each sample was measured in terms of electric conductivity by a DC four-terminal method. The measurement according to the DC four-terminal method was made at 590°C under atmospheric conditions.

The results of electric conductivity measurements for the samples are shown in the following Table 5, wherein sample A indicates the sample of Pt-coprecipitated $ZrO_2$-12mol%$Nd_2O_3$ mixed oxide (Example 4), sample B indicates the sample of Pt-post-carried $ZrO_2$-12mol%$Nd_2O_3$ mixed oxide and sample C indicates the sample of Pt-coprecipitated $CeO_2$-$ZrO_2$-$Nd_2O_3$ mixed oxide. The amount of Pt contained in or carried on samples A, B and C was 1 mass% per sample.

Table 5

| | | Conductivity ($Scm^{-1}$) |
|---|---|---|
| Sample A | Pt (1 mass%)-$ZrO_2$-12mol%$Nd_2O_3$, Pt-coprecipitated | $2.98\times10^{-5}$ |
| Sample B | Pt (1 mass%)-$ZrO_2$-12mol%$Nd_3O_3$, Pt-post-carried | $2.46\times10^{-5}$ |
| Sample C | Pt (1 mass%)-$CeO_2$-80mol%$ZrO_2$-1mol%$Nd_2O_3$, Pt-coprecipitated | $8.34\times10^{-6}$ |

Referring to Table 5, sample C has an electric conductivity of $8.34\times10^{-6}$ $Scm^{-1}$, whereas samples B and A have electric conductivities of $2.46\times10^{-5}$ and $2.98\times10^{-5}$ $Scm^{-1}$, respectively. This shows that in comparison with the Ce-Zr-based mixed oxide, the mixed oxides of Zr and Nd which is a rare earth metal have greater electric conductivities. The table also shows that for the Zr-Nd mixed oxides, the Pt-coprecipitated mixed oxide has a higher electric conductivity than the Pt-post-carried mixed oxide.

Therefore, since the mixed oxides of Zr, rare earth metal other than Ce and precious metal have higher electric conductivity than the Ce-Zr-based mixed oxide, they have excellent oxygen ion conductivity.

*(6) X-Ray Diffraction (XRD) Measurement*

Samples A and B were measured by XRD to analyze their structures. Figure 3 shows XRD measurement results of the catalysts according to one inventive example and one comparative example. In Figure 3, L1 indicates the XRD pattern of sample A, L2 indicates the XRD pattern of sample B, diffraction angle 2$\theta$ (°) is laid off as abscissas and intensity is laid off as ordinates. Furthermore, in Figure 3, the filled circles indicate diffraction peaks P1 to P3 of ZrNdO ($ZrO_2$-12mol%$Nd_2O_3$ mixed oxide) and the filled triangle indicates a diffraction peak S1 of Pt.

Referring to Figure **3,** the XRD pattern of sample B (see L2) exhibits three diffraction peaks of ZrNdO at points PI, P2 and P3 and a diffraction peak of Pt at point S1. Therefore, it can be considered that in the Pt-post-carried sample B, Pt fine particles agglomerate on each catalyst particle and sinter together.

On the other hand, the XRD pattern of sample A (see LI) exhibits three diffraction peaks of ZrNdO at points P1, P2 and P3 but hardly exhibits a diffraction peak of Pt at point S1. Therefore, it can be considered that in the Pt-coprecipitated sample A, Pt fine particles do not sinter but are highly dispersed.

Figure **3** also shows that in the XRD patterns of samples A and B, the ZrNdO diffraction peaks at points P1, P2 and P3 for one of the samples are not shifted from those for the other sample toward lower or higher angles and appear at the same points. From this, it can be inferred that in sample A, Pt fine particles are not placed at and/or between crystal lattice points located inside each mixed oxide particle but placed at and/or between crystal lattice points of the mixed oxide particle in a state of being exposed at the particle surface.

Therefore, since the catalyst according to the present invention contains a mixed oxide consisting of Zr, at least one kind of rare earth metal selected from the group of Yb, Nd, and Sc, and Pt, it can take oxygen from a large number of oxygen-rich sites of each particle via precious metal fine particles into the particle inside and send the taken oxygen to oxygen-lean sites of each particle, unlike the case where precious metal fine particles are post-carried on each mixed oxide particle. Since the mixed oxide has a highly effective function serving as an oxygen pump as described above, the catalyst can extensively improve the low-temperature catalytic activity as compared with the catalyst using oxygen storage component.

Furthermore, since the mixed oxide of the catalyst according to the present invention is obtained by mixing an acidic solution containing Zr ions, ions of at least one kind of rare earth metal selected from Yb, Nd, and Sc, and Pt ions with a basic solution to obtain a mixed oxide precursor through coprecipitation and calcining the precursor, precious metal fine particles such as Pt can be placed in a highly dispersed form on the surface of each mixed oxide crystallite. Hence, the above effect can be performed more effectively.

Furthermore, since the catalyst of the catalyst-equipped DPF according to the present invention contains a mixed oxide consisting of Zr, at least one kind of rare earth metal selected from the group of Yb, Nd, and Sc, and Pt, it can take oxygen from a large number of oxygen-rich sites of each particle via precious metal fine particles into the particle inside and send the taken oxygen to oxygen-lean sites of each particle, unlike the case where precious metal fine particles are post-carried on each mixed oxide particle. Since the mixed oxide has a highly effective function serving as an oxygen pump as described above, the DPF can release active oxygen to portions of the mixed oxide in contact with PMs, thereby enhancing the PM burning rate.

Furthermore, since the mixed oxide of the catalyst-equipped DPF according to the present invention is obtained by mixing an acidic solution containing Zr ions, ions of at least one kind of rare earth metal selected from Yb, Nd, and Sc, and Pt ions with a basic solution to obtain a mixed oxide precursor through coprecipitation and calcining the precursor, precious metal fine particles such as Pt can be placed in a highly dispersed form on the surface of each mixed oxide crystallite. Hence, the above effect can be performed more effectively.

## Claims

**1.** An exhaust gas purification catalyst for an exhaust system of an engine, containing a mixed oxide of Zr, rare earth metal and precious metal,
**characterized in that**
the mixed oxide is a mixed oxide consisting of Zr, at least one kind of rare earth metal selected from the group of Yb, Nd and Sc, and Pt, the mixed oxide is obtained by mixing an acidic solution containing Zr ions, ions of at least one kind of rare earth metal selected from the group of Yb, Nd and Sc, and Pt ions with a basic solution to obtain a mixed oxide precursor through coprecipitation and calcining the precursor.

**2.** A catalyst-equipped diesel particulate filter for an exhaust system of a diesel engine, equipped with a catalyst according to claim 1

## Patentansprüche

**1.** Abgaskatalysator für ein Abgassystem eines Motors, enthaltend ein Mischoxid aus Zr, Seltenerdmetall und Edelmetall,
**dadurch gekennzeichnet, dass**
das Mischoxid ein Mischoxid bestehend aus Zr, zumindest einer Art von Seltenerdmetall ausgewählt aus der Gruppe von Yb, Nd und Sc, und Pt ist, das Mischoxid erhalten wird durch Mischen einer sauren Lösung enthaltend ZrIonen, Ionen von zumindest einer Art von Seltenerdmetall ausgewählt aus der Gruppe von Yb, Nd und Sc, und Pt-Ionen mit einer basischen Lösung, um einen Mischoxid-Precursor durch Kopräzipitation und Kalzinieren des Precursors zu erhalten.

**2.** Ein mit einem Katalysator beladener Dieselpartikelfilter für ein Abgassystem eines Dieselmotors, beladen mit einem Katalysator nach Anspruch 1.

## Revendications

1. Catalyseur de purification pour gaz d'échappement pour un système d'échappement d'un moteur, contenant un oxyde mixte de Zr, de métal de terres rares, et de métal précieux,
**caractérisé en ce que** l'oxyde mixte est un oxyde mixte consistant en Zr, au moins un type de métal de terres rares sélectionné parmi le groupe consistant en Yb, Nd et Sc, et Pt, l'oxyde mixte est obtenu en mélangeant une solution acide contenant des ions Zr, des ions d'au moins un type de métal de terres rares sélectionné parmi le groupe des ions Yb, Nd et Sc, et Pt, avec une solution basique pour obtenir un précurseur d'oxyde mixte par coprécipitation et frittage du précurseur.

2. Filtre à particules diesel équipé d'un catalyseur pour un système d'échappement d'un moteur diesel, équipé d'un catalyseur selon la revendication 1.

FIG. 1

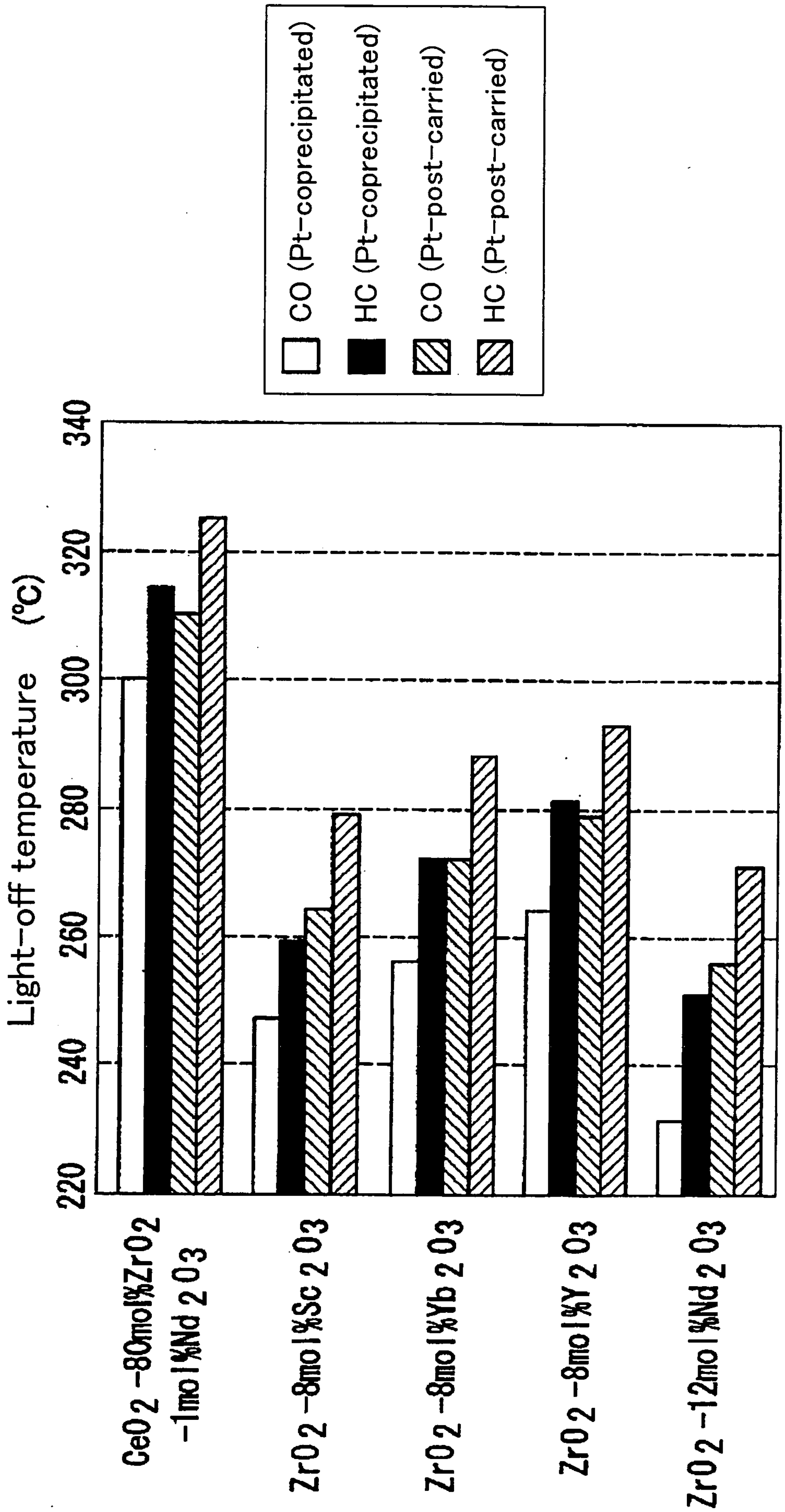
CO (Pt-coprecipitated)
HC (Pt-coprecipitated)
CO (Pt-post-carried)
HC (Pt-post-carried)
Light-off temperature (°C)
220
240
260
280
300
320
340
$CeO_2$-80mol%$ZrO_2$-1mol%$Nd_2O_3$
$ZrO_2$-8mol%$Sc_2O_3$
$ZrO_2$-8mol%$Yb_2O_3$
$ZrO_2$-8mol%$Y_2O_3$
$ZrO_2$-12mol%$Nd_2O_3$

FIG. 2

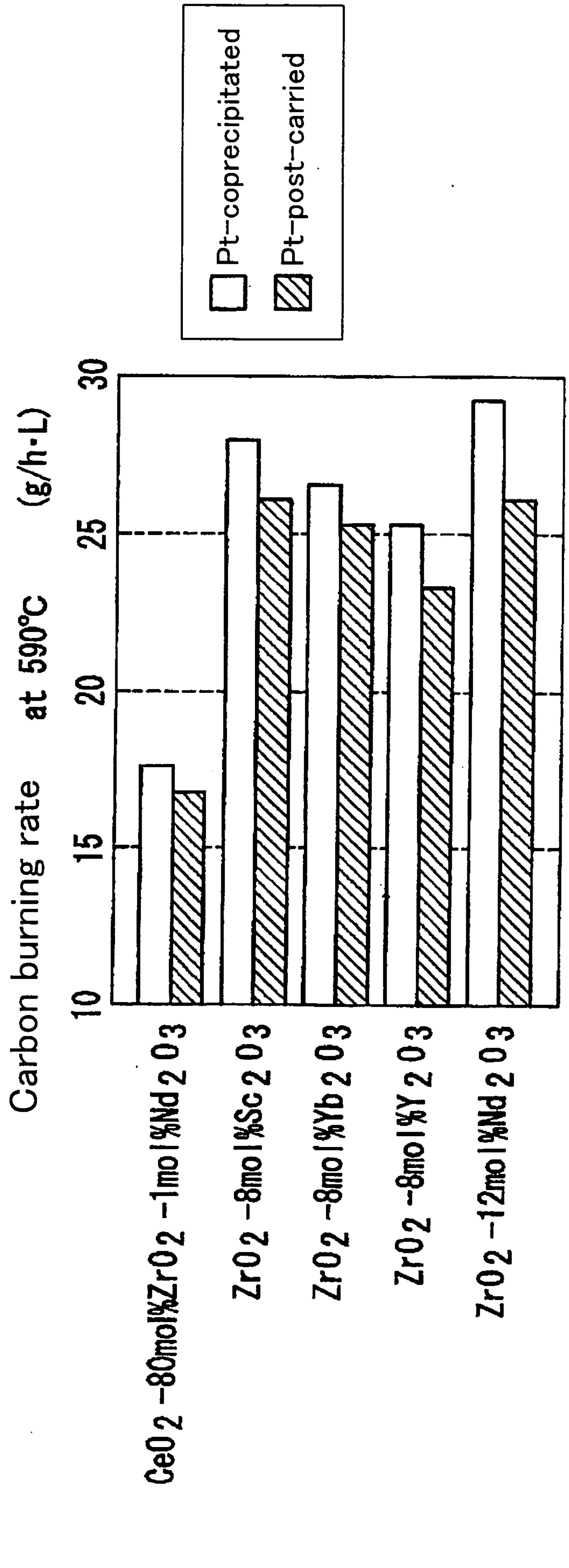
Pt-coprecipitated
Pt-post-carried
Carbon burning rate at 590°C (g/h·L)
10
15
20
25
30
CeO2 -80mol%ZrO2 -1mol%Nd2O3
ZrO2 -8mol%Sc2O3
ZrO2 -8mol%Yb2O3
ZrO2 -8mol%Y2O3
ZrO2 -12mol%Nd2O3

FIG. 3

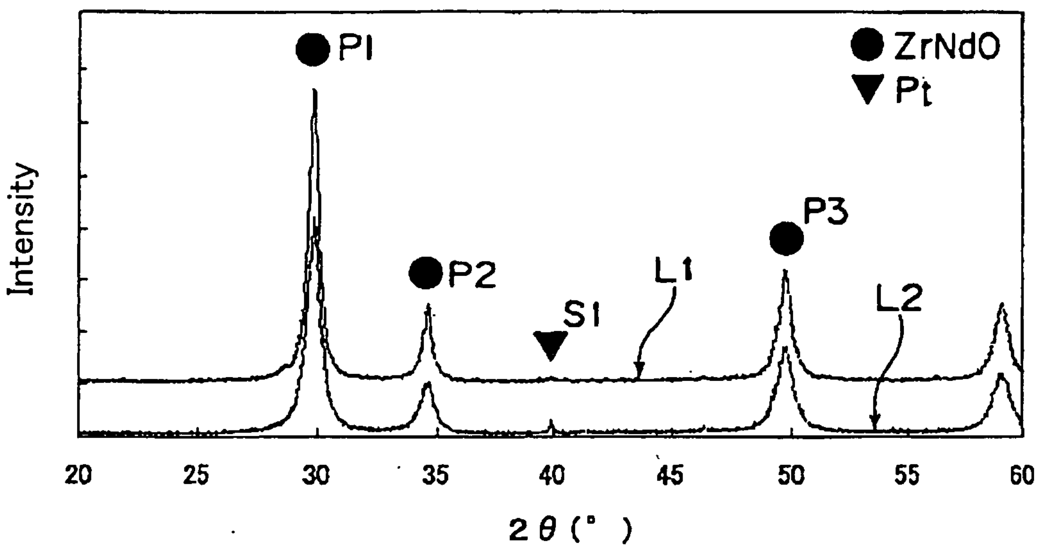

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004174490 A
- JP S6434443 B
- EP 0299485 A
- EP 1840087 A
- US 2005142042 A1
- US 5380692 A
- WO 03021004 A